# FASCICULE DE BREVET EUROPEEN

(11) **EP 1 456 902 B1**
(45) Date de publication et mention de la délivrance du brevet: **18.07.2007**
(21) Numéro de dépôt: 02803056.7
(22) Date de dépôt: 15.11.2002
(51) Int. Cl.: H01M 8/24

(54) **PILE A COMBUSTIBLE ET PROCEDE DE FABRICATION D'UNE TELLE PILE A SURFACE ACTIVE IMPORTANTE ET A VOLUME REDUIT**
BRENNSTOFFZELLE UND VERFAHREN ZUR HERSTELLUNG EINER SOLCHEN MIT GROSSER AKTIVER OBERFLÄCHE UND MIT VERRINGERTEM VOLUMEN
FUEL CELL AND METHOD FOR MAKING SUCH A CELL WITH LARGE ACTIVE SURFACE AND REDUCED VOLUME

(30) Priorité: 16.11.2001 FR 0114841
(43) Date de publication de la demande: 15.09.2004
(73) Titulaire: COMMISSARIAT A L'ENERGIE ATOMIQUE, 75015 Paris (FR)
(72) Inventeur: ARROYO, Jean, F-38240 Meylan (FR); BLOCH, Didier, F-38330 Biviers (FR); LAURENT, Jean-Yves, F-38640 Claix (FR); MARSACQ, Didier, F-38000 Grenoble (FR)
(74) Mandataire: Poulin, Gérard
(86) Numéro de dépôt international: PCT/FR2002/003924
(87) Numéro de publication internationale: WO 2003/043117

(56) Documents cités:
- WO-A-00/45457
- WO-A-00/69007
- WO-A-01/54217
- WO-A-02/080298
- FR-A- 2 347 783
- FR-A- 2 814 857
- US-A- 5 279 906
- PATENT ABSTRACTS OF JAPAN vol. 012, no. 397 (E-672), 21 octobre 1988 (1988-10-21) -& JP 63 138667 A (MITSUBISHI HEAVY IND LTD), 10 juin 1988 (1988-06-10)

## Description

### DOMAINE TECHNIQUE

La présente invention a trait à un procédé de fabrication d'une pile à combustible à surface active importante et volume réduit.

L'invention concerne donc le domaine des piles à combustible, et plus particulièrement des piles à combustible ayant une membrane solide en polymère comme électrolyte, tels que les piles PEMFC (« Protons Exchange Membrane Fuel Cell ») et DMFC (« Direct Methanol Fuel Cell »).

Les piles à combustible du type à électrolyte polymère solide trouvent leurs applications, notamment, dans les transports terrestres, spatiaux, maritimes, et plus particulièrement dans les véhicules terrestres, qui font, à l'heure actuelle l'objet de nombreux programmes de développement, afin de trouver des alternatives à l'utilisation de batteries dans les véhicules électriques.

### ETAT DE LA TECHNIQUE ANTERIEURE

Généralement, les piles à combustible sont constituées d'un empilement de cellules élémentaires. Chacune de ces cellules comprend une anode et une cathode placées de part et d'autre d'un électrolyte. Au niveau de l'anode se produit l'oxydation du combustible, tel que l'hydrogène H₂, pour les piles à hydrogène, produisant ainsi des protons et des électrons. Les électrons rejoignent le circuit électrique extérieur, tandis que les protons se dirigent vers la cathode, au travers de l'électrolyte, qui se présente, généralement sous la forme d'une membrane conductrice ionique. Au niveau de la cathode se produit l'oxydation du comburant, tel que l'oxygène de l'air, s'accompagnant, dans le cas des piles à hydrogène, de production d'eau résultant de la recombinaison des ions produits par la réduction et des protons.

Les densités de puissance obtenues au niveau d'une cellule élémentaire sont très faibles et largement insuffisantes pour permettre le fonctionnement d'équipements électriques. Il est donc indispensable d'assembler un nombre important de ces cellules élémentaires, afin d'accéder à une puissance significative. L'assemblage s'effectue, généralement par un empilement de cellules élémentaires, la séparation entre les cellules étant réalisée au moyen de plaques étanches, dites plaques bipolaires.

Dans le domaine des piles à combustible, de nombreuses configurations ont déjà été proposées dans l'art antérieur.

Ainsi, les piles à combustible de moyenne puissance, soit 10 à 50 kW par cellule, sont généralement élaborées par l'association « filtre-presse » de plaques bipolaires en graphite ou en acier inoxydable et d'assemblages électrode-membrane-électrode obtenus par pressage de deux électrodes en tissu et d'une membrane conductrice protonique en NAFION^{®}.

Les piles à combustible de faible puissance, soit 0.5 à 50 W par cellule, dites micro-piles à combustible, nécessitent, pour leur élaboration le développement d'architectures et de procédés, souvent dérivés des technologies de la microélectronique. La difficulté réside dans l'assemblage de la micro-électrode avec le film mince de matériau conducteur protonique. De plus, la micro-électrode doit présenter une conductivité électronique élevée, une forte perméabilité au gaz notamment à l'hydrogène, dans le cas d'une architecture PEMFC, pour les piles à hydrogène/air, une forte perméabilité au gaz et au méthanol dans les cas d'une architecture DMFC pour les piles à méthanol/air, une aptitude à être mise sous forme d'une couche mince sur une faible surface, une bonne résistance thermomécanique. La micro-électrode doit également posséder une surface adaptée au dépôt d'un catalyseur sous forme dispersée.

Dans la littérature, on distingue des architectures à base de silicium poreux sur lequel sont déposés successivement un catalyseur puis une membrane Nafion^{®} pour former l'assemblage électrode-membrane. Toutefois, les performances d'un tel dispositif sont limitées par la mauvaise cohésion des différentes couches, créant ainsi une forte résistance d'interface, et par une très faible dispersion du catalyseur, ce dernier étant faiblement divisé, afin d'obtenir un dépôt fortement conducteur électronique.

Différents laboratoires ont développé des technologies sur silicium non poreux. Une équipe du Lawrence Livermore National Laboratory a élaboré ainsi une cellule de micro-pile à combustible en déposant, tout d'abord, une couche mince métallique de nickel faisant office de collecteur électronique sur un substrat silicium. Le catalyseur puis le conducteur protonique sont ensuite déposés sur le nickel. Le nickel est ensuite perforé par gravure chimique pour mettre en contact le catalyseur et le réducteur, à savoir l'hydrogène ou le méthanol suivant le système de pile à combustible envisagé. Cette technique présente un certain nombre d'inconvénients, liés en particulier aux propriétés du nickel. En effet, le nickel présente une sensibilité aux phénomènes de corrosion engendrés par le caractère fortement acide du conducteur protonique. Le catalyseur se disperse, de plus, faiblement au niveau de la couche de nickel perforé, qui présente une faible capacité à entraîner une dispersion homogène de l'agent réducteur sur le catalyseur. Enfin, cette technologie engendre une faible probabilité de présence de points triples.

Le demande de brevet WO 97/11503 [1] et le brevet américain US 5,759,712 [2] décrivent une architecture de pile à combustible basée sur l'emploi d'un micro-poreux imprégné d'un matériau conducteur protonique comme élément central d'un système de micro-pile à combustible. Les différents matériaux nécessaires à la formation d'une pile à combustible sont alors déposés de part et d'autre de ce substrat par des techniques classiques de dépôt sous vide. Cette invention a deux inconvénients principaux qui sont d'une part, la fragilité du substrat polymère surtout lorsque celui-ci est traité par des techniques de dépôt sous vide agressives et d'autre part, les mauvaises performances électrochimiques liées notamment au manque de surface active et également, à la fragilité du dépôt de catalyseur déposé directement sur les membranes échangeuses de protons.

L'ensemble de ces architectures exposées présente la particularité d'être toutes planaires et ne permet pas, de ce fait, d'obtenir une surface d'électrode suffisamment élevée pour alimenter en énergie des dispositifs électroniques portables.

Dans cet objectif, plusieurs géométries non planaires sont proposées dans l'art antérieur.

Les brevets américains 6,080,501 [3], 6,007,932 [4] et 6,001,500 [5] décrivent une architecture cylindrique de pile à combustible miniature. Cette architecture est basée sur l'enroulement d'un assemblage électrode-membrane-électrode employé classiquement en géométrie planaire autour d'un mandrin en mousse métallique. Toutefois, les performances d'un tel assemblage sont limitées principalement pour deux raisons :
- l'assemblage électrode-membrane-électrode, initialement planaire, n'est pas adapté à une géométrie cylindrique, ce qui occasionne une quasi impossibilité à rétablir les contacts anode-anode, cathode-cathode et membrane-membrane après enroulement de l'assemblage électrode-membrane-électrode planaire ;
- les collecteurs de courant ne sont pas intimement en contact avec l'anode et la cathode, générant ainsi des résistances d'interface trop élevées.

Une autre équipe américaine a développé un concept de pile à combustible miniature tubulaire similaire. Un assemblage électrode-membrane-électrode est enroulé pour former un cylindre. Celui-ci est ensuite intégré dans un dispositif métallique de « porte-cylindres » permettant d'assurer la collection du courant électrique. Toutefois, ce type d'architecture n'est pas adapté aux appareils électroniques portables principalement à cause de l'encombrement généré, par l'utilisation du système de « porte-cylindres ».

Le brevet JP 63 138667 [6] présente un procédé de réalisation d'une structure non planaire de pile, ledit procédé consistant à déposer un film de pile sur la surface interne d'une partie des trous d'un support grillagé. Il est décrit également la possibilité d'assembler plusieurs de ces supports.

Toutefois, ce dispositif, obtenu par le procédé décrit, présente les inconvénients suivants :
- du fait de la configuration des trous, plus précisément du fait que les trous présentent une forme parallélépipédique de très faible hauteur, il est difficile de réaliser un dépôt de film de pile régulier sur la surface interne desdits trous ;
- en raison de la géométrie et de la disposition des trous dans ce document, il est nécessaire de dédier une partie des trous du support grillagé au transport des réactifs d'alimentation de la pile, ce qui engendre une perte de surface pour déposer les films de pile et par conséquent une perte puissance de ladite pile occasionnée par cette configuration.

Il existe donc un véritable besoin pour un procédé de fabrication de piles à combustible, qui permette d'obtenir des piles ayant un volume total le plus faible possible tout en conservant une surface active d'électrode élevée, et tout en permettant la réalisation d'un réseau de connexions électriques et de distribution des réactifs.

Il existe, en outre, un besoin, pour ce type de piles, pouvant développer des puissances électriques compatibles avec une utilisation desdites piles dans le domaine, notamment, des transports terrestres.

### EXPOSÉ DE L'INVENTION

Le but de la présente invention est donc de proposer un procédé de fabrication d'une pile à combustible, adaptée aux équipements quotidiens, qui réponde, entre autres, au besoin mentionné ci-dessus, et qui ne présente pas les inconvénients, les désavantages, défauts et limitations de l'art antérieur, et qui permette notamment de réaliser une pile ayant une surface active beaucoup plus élevée que sa surface d'occupation au sol. De plus, le but de la présente invention est de proposer un procédé de réalisation d'une pile à combustible, qui permette l'obtention d'une pile à puissance élevée tout en ménageant un espace important pour la réalisation d'un réseau de connexion électrique et de connexion des réactifs de ladite pile.

Le but de la présente invention est enfin de fournir une pile à combustible présentant un volume réduit, tout en présentant une surface active importante.

Ce but et d'autres encore sont atteints, conformément à l'invention, par un procédé de fabrication d'une pile à combustible, ladite pile comportant un ensemble de cellules élémentaires connectées électriquement entre elles, chaque cellule élémentaire comprenant au moins trois couches, c'est-à-dire une couche de membrane placée entre une première couche d'électrode et une seconde couche d'électrode, ledit procédé comprenant successivement les étapes suivantes :
- une étape de réalisation d'une pluralité de trous sur au moins deux supports, chaque trou débouchant, de part et d'autre de deux faces opposées de chaque support, par une première section d'orifice et une seconde section d'orifice et chaque trou présentant une surface latérale;
- une étape de réalisation de cellules élémentaires sur la surface latérale de chacun desdits trous;
- une étape de réalisation, sur l'une au moins desdites faces opposées de chaque support, d'un réseau de connexions électriques et d'un réseau de distribution de réactifs, lesdits réseaux reliant les cellules élémentaires entre elles, l'ensemble formé d'un support, des cellules élémentaires et desdits réseaux constituant un module de base;
- une étape d'assemblage d'au moins deux modules de base, de sorte que les cellules élémentaires de chaque module de base soient placées en regard des cellules élémentaires du (des) module(s) de base adjacent (s),
ledit procédé étant caractérisé en ce que, lors de l'étape de réalisation de la pluralité de trous, chaque trou est réalisé de telle sorte qu'au moins l'une desdites première et/ou seconde section d'orifice présente une surface inférieure à la surface d'au moins une section dudit trou prise dans une plan parallèle auxdites faces opposées et en ce que, pour chaque trou, la première ou seconde section d'orifice présente une surface inférieure à la surface de l'autre section d'orifice.

On précise que, selon l'invention, la terminologie « module de base » se réfère à l'ensemble constitué d'un support, au sein duquel sont réalisées des cellules élémentaires de pile, lesdites cellules étant connectées électriquement entre elles par l'intermédiaire de réseaux de connexions électriques et alimentées par des réseaux de distribution de réactifs, lesdits réseaux étant réalisées au niveau d'au moins une des faces du support, sur lesquelles sont pratiquées les trous.

On précise que, selon l'invention, la surface latérale désigne la surface des parois délimitant le trou.

On précise que, selon l'invention, le réseau de distribution des réactifs désigne le réseau, qui va permettre l'alimentation des électrodes en oxydant ou réducteur.

On précise que, lorsqu'on se réfère à une section du trou prise dans un plan parallèle aux faces opposées du support, l'on se réfère à toutes sections hormis les sections d'orifice susmentionnées.

On précise que, par support, on entend, de préférence, un support de forme sensiblement parallélépipédique.

On précise que par surface active, on entend, dans ce qui précède et ce qui suit, la surface occupée par les électrodes, qui sont le siège des réactions électrochimiques de la pile.

Avantageusement, des trous conformes à la présente invention, peuvent être des trous de forme sensiblement tronconique, ou sensiblement en forme de pyramide tronquée.

Le fait de réaliser des trous présentant une telle géométrie a pour effet de présenter les avantages suivants :
- par rapport à des trous présentant des parois perpendiculaires au support comme cela est le cas dans la réalisation du document japonais susmentionné, le fait de faire des trous présentant un profil de trous à parois sensiblement inclinées par rapport à la verticale, contribue à faciliter le dépôt des couches nécessaires à la constitution des cellules élémentaires ;
- par rapport à des trous présentant des parois perpendiculaires au support, le fait de réaliser des trous ayant une surface de section d'orifice inférieure par rapport à la surface de l'autre section d'orifice permet d'obtenir un gain de place au niveau des faces où sont pratiqués lesdits trous, notamment au niveau de la face présentant les sections d'orifice de surfaces les plus faibles ; ce gain de place peut être dédié à la réalisation du réseau de connexion électrique et du réseau de distribution des réactifs, voire à la réalisation de trous supplémentaires, pour augmenter ainsi la surface active de la pile ;
- par rapport à des trous présentant des parois perpendiculaires au support, la surface latérale (ou surface interne du trou) peut être plus importante, entraînant ainsi une augmentation de la surface active, dans la mesure où la surface latérale sert de base à la réalisation des cellules élémentaires.

On précise, que lorsque l'on se réfère ci-dessus, à titre comparatif, à des trous présentant des parois perpendiculaires au support, ces trous à parois perpendiculaires présentent une section identique à la première section d'orifice ou seconde section d'orifice mentionnée ci-dessus.

De plus, le caractère avantageux de cette invention réside dans le fait d'assembler deux ou plusieurs modules de base afin d'augmenter encore davantage la surface active de la pile résultante.

Ainsi, l'intérêt de la présente invention est de pouvoir, de cette manière, démultiplier la surface latérale des trous, en les disposant en vis-à-vis, par assemblage d'au moins deux modules de base.

Ainsi, grâce à ce procédé selon l'invention, l'on peut accéder à des piles à combustible à surface d'occupation au sol réduite, tout en présentant une surface active élevée, dans la mesure où les surfaces actives de la pile se trouvent au coeur du matériau constitutif du support.

De plus, le fait de réaliser, selon l'invention, des systèmes issus de l'assemblage de plusieurs modules, en plus de la géométrie particulière de certains trous, présenté l'avantage majeur de faciliter l'élaboration des couches actives sur les parois desdits trous.

En effet, si l'on considère une architecture de pile avec un seul module, la pente des parois, par exemple, pour des trous à volume conique, serait figée par la géométrie, notamment l'épaisseur de support, les surfaces de section d'orifice des trous. Dans un tel système, il faudrait développer des parois en forte pente pour gagner en surface active. En revanche, le système issu de l'assemblage de plusieurs modules, tel qu'envisagé par le procédé selon l'invention, peut être constitué de modules dont la hauteur est plus faible (que si l'on utilise qu'un seul module) et par conséquent, les parois internes des trous peuvent avoir un profil moins raide. De ce fait, il est plus aisé, à partir de ce système, de réaliser le dépôt de couches, afin de constituer les cellules élémentaires.

Selon l'invention, les trous, réalisés dans chaque support, peuvent être réalisés par gravure, ou encore par ablation laser.

Le support peut être constitué, selon l'invention, d'un matériau choisi dans un groupe constitué par le silicium, tel que le silicium poreux, le graphite, les céramiques, les polymères.

Par exemple, les céramiques peuvent être de l'oxyde de titane ou de l'alumine et les polymères du Téflon^{®}, du Peek^{®} ou des polysulfones.

De préférence, chaque trou pratiqué dans chaque support présente une première section d'orifice et une seconde section d'orifice de surfaces inférieures à la surface latérale dudit trou, ce qui présente l'avantage de dédier une large surface des faces du support à la réalisation des réseaux de connexions électriques et des réseaux de distribution des réactifs.

La réalisation de cellules élémentaires, au niveau des trous pratiqués dans chaque support, selon l'invention s'effectue par dépôt successif sur la surface latérale de chacun desdits trous d'au moins trois couches, pour constituer la première couche d'électrode, la couche de membrane et la seconde couche d'électrode.

Cette phase de réalisation peut comprendre, en outre, le dépôt de collecteurs de courant au niveau de chaque couche d'électrode Selon l'invention, l'assemblage de deux modules de base, lorsque cet assemblage met en regard deux faces dénuées de réseaux (à savoir réseau de connexion électrique et réseau de distribution des réactifs, peut comprendre successivement les étapes suivantes :
- une étape de mise en place, sur au moins l'une desdites faces dénuées du ou desdits réseau(x), d'une couche de liaison; et
- une étape de solidarisation des modules de base, au niveau desdites faces.

Selon l'invention, l'assemblage d'au moins deux modules de bases, mettant en regard des faces, dont au moins l'une est pourvue d'un réseau de connexions électriques et/ou d'un réseau de distribution des réactifs peut comprendre successivement les étapes suivantes :
- une étape de masquage de la ou les faces pourvues du ou desdits réseaux par une couche étanche et isolante;
- une étape de planarisation de la ou les faces pourvues du ou desdits réseaux;
- une étape de mise en place d'une couche de liaison sur l'une au moins des faces à assembler;
- une étape de solidarisation desdites faces à assembler desdits modules de base.

De préférence, la couche de liaison est de constitution identique à la couche de membrane.

Ceci présente notamment l'avantage de pouvoir mettre en place, en une seule étape, les membranes sur les parois des trous et la couche de liaison en surface.

Selon une variante de réalisation de l'invention, la couche de liaison peut être également un adhésif autre que la couche de membrane choisi dans un groupe constitué par les époxydes, les polyimides, les silicones, les polymères acryliques.

Selon une autre variante de l'invention, la couche de liaison est en un matériau choisi parmi l'oxyde de silicium et le nitrure de silicium.

Une fois la couche de liaison mise en place, la solidarisation de deux modules de base peut se faire, selon l'invention, par serrage.

Selon un autre mode de réalisation de l'invention, la solidarisation de deux modules de base peut se faire par collage.

Enfin, la solidarisation peut se faire par adhésion moléculaire.

De préférence, l'étape de masquage, de planarisation, de collage et de mise en place de la couche de liaison sont effectuées de manière simultanée par mise en place d'une couche unique.

Selon un mode particulièrement avantageux de réalisation de l'invention, la couche unique est une couche de constitution identique à la couche de membrane.

Selon une variante, la couche unique est une couche de liaison en un matériau choisi parmi l'oxyde de silicium et le nitrure de silicium.

Un autre but de la présente invention est de proposer une pile à combustible susceptible d'être obtenu par le procédé précédemment décrit.

### BRÈVE DESCRIPTION DES DESSINS

L'invention va maintenant être décrite plus en détail en référence aux dessins annexés dans lesquels :
- La figure 1 représente une vue en coupe d'un trou de géométrie conforme à la présente invention, sur la surface latérale duquel a été réalisé par le procédé de l'invention, une cellule élémentaire de pile.
- La figure 2 représente une vue en perspective cavalière, mettant en évidence un assemblage de deux modules de base (ledit assemblage de deux modules de base étant appelé selon la terminologie de l'invention 'niveau de cavités').
- La figure 3 représente une vue en coupe représentant un assemblage résultant de l'accolement de deux niveaux de cavités, ledit assemblage étant obtenu par un procédé selon l'invention.
- La figure 4 représente différents modes d'assemblage de 4 modules de base.

### EXPOSÉ DÉTAILLE DE L'INVENTION.

Le procédé de fabrication d'une pile à combustible, conformément à l'invention, comporte, successivement, une étape de réalisation d'une pluralité de trous au dans au moins deux supports, suivi d'une étape de réalisation de cellules élémentaires au niveau de chacun des trous, une étape de réalisation, sur au moins l'une des faces de chaque support, d'un réseau de connexions cathodiques, d'un réseau de connexions anodiques et d'un réseau de distribution des réactifs, à l'issue de laquelle l'ensemble obtenu est un module de base, une étape d'assemblage d'au moins deux modules de base, lesdits trous étant réalisés de telle sorte qu'au moins l'une desdites première et/ou seconde section d'orifice de chaque trou présente une surface inférieure à la surface d'au moins une section dudit trou prise dans une plan parallèle auxdites faces opposées et en ce que, pour chaque trou, la première ou seconde section d'orifice présente une surface inférieure à la surface de l'autre section d'orifice.

L'étape de réalisation de la pluralité de trous, au niveau de chaque support, peut s'effectuer selon tout procédé connu, par exemple, au moyen d'une gravure telle que la gravure à plasma ou la gravure humide. Une fois les trous réalisés, on met en place, sur la surface latérale de chacun de ces trous, des cellules élémentaires de pile, par exemple, par dépôt successif sur la surface latérale de chacun desdits trous d'une première couche d'électrode, d'une couche de membrane et d'une seconde couche d'électrode, et éventuellement de collecteurs de courant au niveau de chacune des couches d'électrode. Selon l'invention, le dépôt des couches d'électrode peut être effectué par tout procédé connu permettant d'accéder à des dépôts sous forme de couches minces. Ce dépôt peut s'effectuer, par exemple, par dépôt physique en phase vapeur (PVD pour Physical Vapor Deposition), dépôt chimique en phase vapeur (CVD pour Chemical Vapor Deposition), enduction centrifuge (« spin-coating ») ou encore par trempage d'une couche à base, par exemple, de carbone platiné.

Selon l'invention, le dépôt de la couche de membrane peut s'effectuer, par exemple, par voie liquide. Le matériau constitutif de la membrane peut être choisi, par exemple, dans un groupe constitué par les polyimides, les polyéthersulfones, les polystyrènes et leurs dérivés, les polyéthercétones et leurs dérivés, les polybenzoaxoles, les polybenzimidazoles et leurs dérivés, les polyarylènes tels que les paraphénylènes et polyparaxylylènes.

Les cellules élémentaires ainsi constituées, sont destinées à être connectées électriquement, afin d'additionner les puissances électriques individuelles de chacune d'elles. De plus, ces cellules doivent être alimentées par des réactifs. Pour ce faire, le procédé comporte une étape de réalisation d'un réseau de connexions électriques et d'un réseau de distribution des réactifs sur au moins l'une des faces du support.

Pour réaliser ces étapes de connexions électriques, les techniques de photo-lithographie, au moyen de résine photosensible ou de film sec photosensible peuvent être utilisées. Des techniques de gravure peuvent également être envisagées, notamment la gravure par bombardement d'ions lourds.

La réalisation du réseau de distribution des réactifs, peut s'effectuer par gravure de canaux sur l'une au moins des faces du support, lesdits canaux assurant l'acheminement des réactifs et ledit acheminement pouvant être optimisé par la mise en place d'une couche de diffusion.

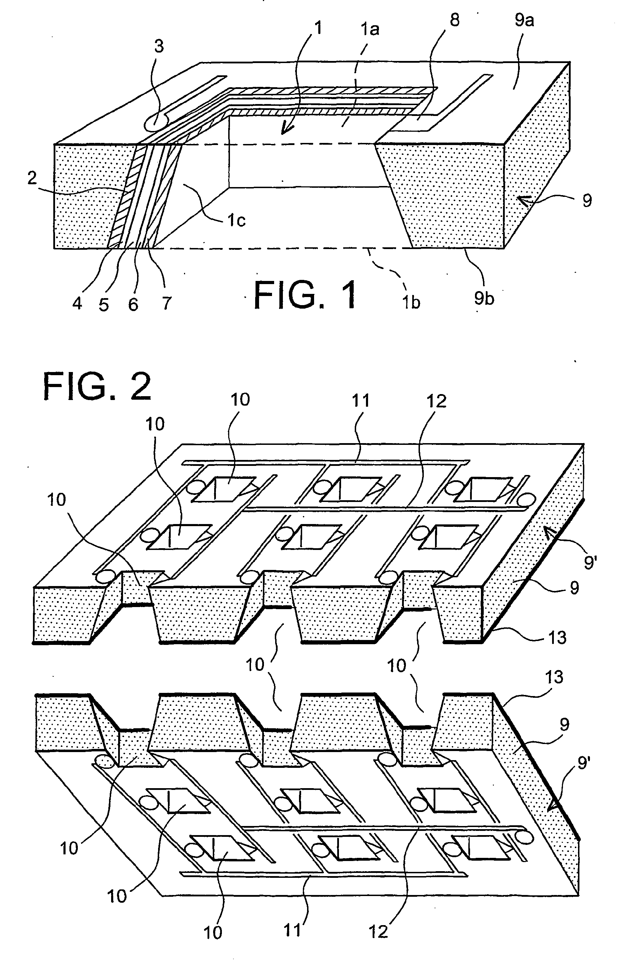

La figure 1 représente un trou 1 à géométrie conforme à la présente invention, trou sur les parois duquel sont disposées des couches constitutives d'une cellule élémentaire, lors d'une étape du procédé de l'invention.

Selon ce mode particulier, le trou 1 présente une forme pyramidale tronquée, plus précisément à base carrée et débouche de part et d'autre des faces opposées 9a, 9b d'un support 9 par une première section d'orifice référencée 1a et une seconde section d'orifice 1b, la surface de la première section d'orifice étant, dans ce cas particulier, inférieure à toutes sections quelconques du trou prises dans un plan parallèle aux faces opposées susmentionnées et ledit trou présentant une surface latérale 1c. Ce trou présente un profil intérieur en pente, ce qui contribue à faciliter l'étape de réalisation des cellules élémentaires, par rapport à un trou dont les parois seraient perpendiculaires aux faces opposées dudit support.

Sur la surface latérale 1c de ce trou est disposée successivement :
- un collecteur de courant anodique 2, ledit collecteur de courant étant relié en surface à un réseau de connexions anodiques se présentant sous forme de pistes 3 ;
- une première couche d'électrode 4, remplissant, selon ce mode de réalisation, la fonction d'anode ;
- une couche de membrane 5 ;
- une seconde couche d'électrode 6, remplissant le rôle de cathode ;
- un collecteur de courant cathodique 7, relié en surface à un réseau de connexions cathodiques, se présentant sous forme de pistes 8.

Selon la terminologie de l'invention, le support, muni de trous, au sein desquels sont réalisées des cellules élémentaires constitue un module de base, ledit module étant destiné à être assemblé à au moins un autre module, de façon à former au moins un niveau de cavité.

On note que, la terminologie « niveau de cavités », utilisée dans la description de l'invention, se réfère à l'ensemble résultant de l'assemblage de deux modules de base définis précédemment.

La figure 2 permet de comprendre, selon un mode de réalisation particulier de l'invention, la manière, dont sont assemblés deux modules de base, référencés 9'. Ainsi, cette figure représente deux supports 9 sensiblement identiques et de forme parallélépipédique, munis de trois rangées de trous 10, de forme pyramidale tronquée à base carrée. Chaque trou 10 constitue une cellule élémentaire tel que décrite précédemment dans la figure 1, les différentes cellules étant connectées électriquement en série par un réseau de connexions électriques 11,12 (respectivement anodiques et cathodiques) se présentant sous la forme de pistes, de manière à additionner les surfaces actives de chaque cellule élémentaire. Il est bien entendu, que, selon une variante de l'invention, la connexion électrique entre les différentes cellules peut se faire en parallèle. Pour des raisons de commodité de représentation, le réseau de distribution des réactifs n'est pas représenté sur cette figure.

Préalablement à l'assemblage, selon ce mode particulier de réalisation de l'invention, les faces dénuées de réseaux de connexions électriques et de distribution des réactifs, de deux modules de base sont recouvertes d'une couche de liaison 13 imperméable aux réactifs. Cette couche de liaison peut être, par exemple; la couche de membrane, utilisée notamment pour ses propriétés d'étanchéité aux réactifs mais également une couche présentant des propriétés adhésives, ladite couche étant constituée, par exemple, d'un matériau choisi dans un groupe constitué par les époxydes, les polyimides, les silicones, les polymères acryliques. Notons que l'assemblage de deux modules de base doit s'effectuer de telle manière à ce que les trous d'un module de base soient ajustés en regard des trous du ou des modules de base adjacents, de façon à additionner la surface active d'un trou d'un module avec la surface active du trou du ou des modules adjacents. Pour accéder à ce résultat, les modules de base destinés à être assemblés, sont, par exemple, positionnés à l'aide d'une machine de positionnement double face avec, au niveau de chaque module, un système de croix de positionnement.

Une fois le positionnement effectué, l'assemblage est finalisé par une étape de solidarisation des deux modules de base, ladite étape pouvant s'effectuer selon différentes techniques.

Ainsi, on peut envisager la solidarisation par serrage, notamment lorsque la couche de liaison mise en place sur au moins l'une des faces dénuées de réseaux du module ne présentent pas de propriétés adhésives suffisantes pour assurer la cohésion des deux modules de base.

La solidarisation peut s'effectuer également par collage. Parmi les techniques de collage envisageables, on peut citer le collage par adhésion moléculaire, le collage par apport d'un adhésif ou par soudure de matériaux polymères de même nature après traitement aux environs de la température de transition vitreuse. Par exemple, lorsque la couche de liaison est de constitution identique à la couche de membrane, ladite membrane étant en matériau polymère, la solidarisation peut être obtenue par traitement thermique de la couche à une température supérieure ou égale à la température de transition vitreuse du polymère.

L'ensemble, résultant de cette étape de solidarisation de deux modules de base, constitue, selon la terminologie de l'invention, un niveau de cavités.

Afin d'obtenir des piles présentant un rapport entre surface active et surface d'occupation au sol de ladite pile encore plus important, on peut envisager, selon l'invention, d'assembler plus de deux modules de base, par exemple, par assemblage d'au moins deux niveaux de cavité ou d'au moins un niveau de cavité avec au moins un module de base.

Pour ce faire, un tel assemblage comporte avantageusement, le cas échéant, une étape de masquage des réseaux de connexions électriques et de distribution de réactifs des faces, destinées à être accolées, par une couche étanche et isolante, une étape de planarisation de la ou les faces pourvues desdits réseaux suivie d'une étape de mise en place d'une couche de liaison sur l'une au moins des faces, destinées à être accolées et enfin d'une étape de solidarisation des faces en question.

Ces mêmes étapes sont applicables, lorsqu'il s'agit d'assembler deux modules de base dont l'une au moins des faces à accoler est pourvue d'un réseau de connexions anodiques et/ou cathodiques et/ou de distribution des réactifs.

L'étape de masquage consiste, comme son nom l'indique, à masquer les réseaux de connexions électriques et les réseaux de distribution des réactifs, afin d'éviter les problèmes de courts-circuits lors de l'accolement des deux faces et les problèmes de fuite de réactifs.

Cette étape est, par exemple, assurée par la mise en place d'une couche étanche et isolante.

L'étape de planarisation consiste à rendre planes les surfaces des faces pourvues de réseaux destinées à l'accolement, par exemple par mise en place d'une couche planarisante ou par un procédé mécanique tel que le polissage. Cette étape de planarisation est nécessaire, pour éviter tout problème de discontinuité de surfaces lors de l'assemblage des modules.

Un mode particulièrement avantageux de réalisation de l'invention consiste à réaliser l'étape de masquage, de planarisation et de mise en place d'une couche de liaison par mise en place d'une seule couche, qui est, par exemple, soit une couche de constitution identique à la membrane, constituée par exemple par du Nafion^{®}, soit une couche en matériau inorganique tel qu'un matériau choisi parmi l'oxyde de silicium, le nitrure de silicium ou encore une multicouche constituée de ces différents matériaux.

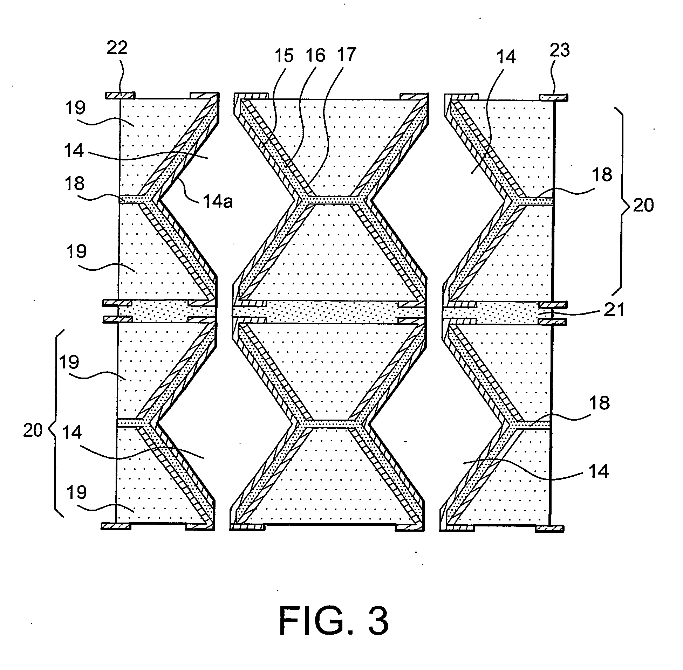

La figure 3 illustre une vue en coupe d'une pile résultant de l'accolement de deux niveaux de cavités, obtenu selon un mode particulier de réalisation de l'invention.

Les trous 14 pratiqués au niveau de ces différents modules de base sont de forme tronconique, ce qui correspond à une géométrie de trous conforme à la présente invention.

On distingue, sur la surface latérale 14a de chaque trou 14 la superposition de couches, à savoir une première couche d'électrode 15, une couche de membrane 16 et une seconde couche d'électrode 17.

Une couche 18, correspondant à une couche de liaison étanche, assure l'étanchéité entre deux modules de base 19 adjacents, constituant, ainsi, par leur assemblage un niveau de cavités 20. Dans cette configuration, obtenue selon un mode particulier de réalisation de l'invention, la couche 18 est de constitution identique à la couche de membrane 16. On note, que selon ce mode particulier de réalisation, l'assemblage de deux modules de base 19, pour accéder à un niveau de cavités 20, consiste à assembler deux faces dénuées de réseaux.

Une couche unique 21, assurant à la fois l'adhérence, l'étanchéité, l'isolation et la planarisation assurent l'assemblage entre deux niveaux de cavités 20. Selon cette configuration, obtenue selon un mode particulier de réalisation de l'invention, la couche unique 21 est de constitution identique à la couche de membrane 16.

Les cellules des deux niveaux de cavités sont reliées électriquement entre elles par l'intermédiaire de réseaux de connexions électriques 22, 23 en série.

L'assemblage de deux modules de base, pour former un niveau de cavités, ainsi que de deux niveaux de cavités peut s'envisager de différentes façons.

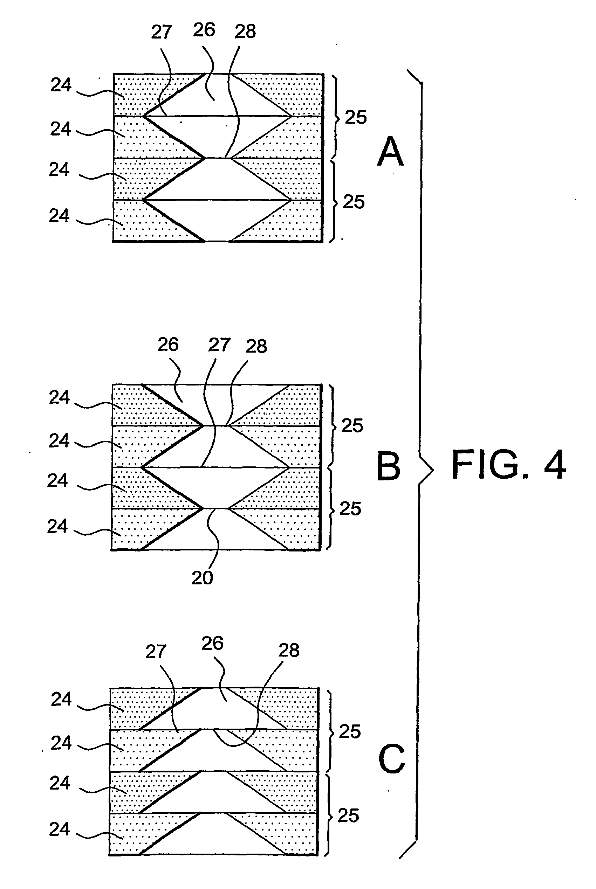

Ainsi, les figures 4A, 4B et 4C illustrent différentes vues en coupe de différents modes d'assemblage de 4 modules de base. Selon ces modes de réalisation particuliers, chacun des modules de base comprend une pluralité de trous, lesdits trous présentant une forme tronconique.

Selon la figure 4A, chacun des deux niveaux de cavités 25 résulte de l'assemblage de deux modules de base 24 notamment par mise en regard des trous 26 par leurs bases 27 (représentées en trait plein sur la figure) lesdits niveaux étant ensuite assemblés par mise en regard des cavités ainsi constituées par leurs sommets 28 (représentés en trait plein sur la figure).

Selon la figure 4B, chacun des niveaux de cavités 25 résulte de l'assemblage de deux modules 24 notamment par mise en regard des trous 26 par leurs sommets 28, lesdits niveaux étant ensuite assemblés notamment par mise en regard des cavités ainsi constituées par leurs bases 27.

Enfin, selon la figure 4C, chacun des niveaux de cavités 25 résulte de l'assemblage de deux modules de base 24 par mise en regard des trous 26 base 27 contre sommet 28 lesdits niveaux étant ensuite assemblés par mise en regard des cavités ainsi formées base 27 contre sommet 28. Ces différentes variantes d'assemblage contribuent à créer des cavités complexes, siège de cellules élémentaires constitutives de la pile à combustible, de surface interne importante par rapport à la surface des sections d'orifice des cavités résultantes. Ainsi, l'on obtient une surface active élevée par rapport à la surface apparente de l'ensemble ainsi formé.

L'invention va maintenant être décrite en référence à l'exemple suivant illustratif et non limitatif.

### Exemple

L'objectif est de développer une surface active de 350 cm² pour une surface apparente de 25 cm² et une énergie de 10 Wh.

Pour ce faire, le support est une plaque de silicium monocristallin d'épaisseur 400 micromètres, de surface apparente 25 cm², sur laquelle est gravé un réseau de trous. Les trous sont réalisés par gravure plasma et présentent une section carrée de 100 micromètres de côté, une surface d'ouverture de 56 %, la surface d'ouverture correspondant au rapport entre la surface creuse et la surface totale et un facteur de réduction de 80 % entre la surface d'entrée et de sortie des trous. De ce fait, la surface développée est 7 fois plus grande que la surface apparente. Sont déposés sur les flancs des trous successivement les couches minces nécessaires à la réalisation d'une pile à combustible, à savoir :
- une anode comportant, dans le cadre de cet exemple, un collecteur de courant et une couche de catalyseur déposée par pulvérisation d'une encre active ;
- une fine membrane d'électrolyte, sous forme d'une couche mince de NAFION^{®}, déposée par trempage ;
- une couche de catalyseur déposée sur la membrane pour activer la réaction au niveau de la cathode, suivie d'un dépôt métallique, destiné à assurer la collecte du courant électrique au niveau de la cathode.

Les réseaux de connexions anodiques et cathodiques sont réalisés, selon cet exemple, sur une des faces du support, par des techniques de photo-lithographie avec des résines photosensibles et des films secs photosensibles et le réseau de distribution des réactifs par gravure des canaux. On obtient à l'issue de ces étapes un module de base.

L'assemblage de deux modules de base est réalisé par l'intermédiaire de couches de NAFION^{®}, collées après traitement thermique à une température supérieure à la température de transition vitreuse. On obtient de cette manière un niveau de cavités.

L'assemblage de plusieurs niveaux de cavité est assuré par une couche en silice et finalisé par une étape de collage moléculaire.

Notons que le positionnement précis des modules ou des niveaux de cavités destinés à être assemblés est effectué à l'aide d'une machine de positionnement double face.

## Revendications

1. Procédé de fabrication d'une pile à combustible, ladite pile comportant un ensemble de cellules élémentaires connectées électriquement entre elles, chaque cellule élémentaire comprenant au moins trois couches, c'est-à-dire une couche de membrane placée entre une première couche d'électrode et une seconde couche d'électrode, ledit procédé comprenant successivement les étapes suivantes :
- une étape de réalisation d'une pluralité de trous (1,10) sur au moins deux supports (9), chaque trou débouchant, de part et d'autre de deux faces opposées (9a, 9b) de chaque support, par une première section d'orifice (1a) et une seconde section d'orifice (1b) et chaque trou présentant une surface latérale (1c);
- une étape de réalisation de cellules élémentaires sur la surface latérale (1c) de chacun desdits trous;
- une étape de réalisation, sur l'une au moins desdites faces opposées de chaque support, d'un réseau de connexions électriques (11,12), et d'un réseau de distribution de réactifs, lesdits réseaux reliant les cellules élémentaires entre elles, l'ensemble formé d'un support, des cellules élémentaires et desdits réseaux constituant un module de base (9');
- une étape d'assemblage d'au moins deux modules de base (9'), de sorte que les cellules élémentaires de chaque module de base soient placées en regard avec les cellules élémentaires du (des) module(s) de base adjacent(s),
ledit procédé étant **caractérisé en ce que**, lors de l'étape de réalisation de la pluralité de trous, chaque trou est réalisé de telle sorte qu'au moins l'une desdites première ou seconde section d'orifice (1a, 1b) de chaque trou présente une surface inférieure à la surface d'au moins une section dudit trou prise dans une plan parallèle auxdites faces opposées et **en ce que**, pour chaque trou, la première ou seconde section d'orifice présente une surface inférieure à la surface de l'autre section d'orifice.

2. Procédé de fabrication d'une pile à combustible selon la revendication 1, **caractérisé en ce que** les trous sont sensiblement tronconiques.

3. Procédé de fabrication d'une pile à combustible selon la revendication 1, **caractérisé en ce que** les trous ont sensiblement une forme de pyramide tronquée.

4. Procédé de fabrication d'une pile à combustible, selon l'une quelconque des revendications 1 à 3, **caractérisé en ce que** chaque trou pratiqué dans chaque support présente une première section d'orifice et une seconde section d'orifice de surfaces inférieures à la surface latérale dudit trou.

5. Procédé de fabrication d'une pile à combustible, selon l'une quelconque des revendications 1 à 4, **caractérisé en ce que** les trous, réalisés dans chaque support, sont effectués par gravure.

6. Procédé de fabrication d'une pile à combustible, selon la revendication 1 à 4, **caractérisé en ce que** les trous, réalisés dans chaque support, sont effectués par ablation laser.

7. Procédé de fabrication d'une pile à combustible, selon l'une quelconque des revendications précédentes, **caractérisé en ce que** le support est constitué d'un matériau choisi dans un groupe constitué par le silicium, tel que le silicium poreux , le graphite, les céramiques, les polymères.

8. Procédé de fabrication d'une pile à combustible selon l'une quelconque des revendications précédentes, **caractérisé en ce que** la réalisation des cellules élémentaires s'effectue par dépôt successif, sur la surface latérale de chacun desdits trous, d'au moins trois couches, pour constituer la première couche d'électrode, la couche de membrane, la seconde couche d'électrode.

9. Procédé de fabrication d'une pile à combustible selon la revendication 8, **caractérisé en ce que** la réalisation des cellules élémentaire comprend en outre le dépôt de collecteurs de courant au niveau de chaque couche d'électrode.

10. Procédé de fabrication d'une pile à combustible, selon l'une quelconque des revendications 1 à 9, **caractérisé en ce que** l'assemblage de deux modules de base, lorsque cet assemblage met en regard deux faces dénuées des réseaux définis dans la revendication 1, comprend successivement les étapes suivantes :
- une étape de mise en place, sur au moins l'une desdites faces dénuées de réseaux, d'une couche de liaison (13); et
- une étape de solidarisation des modules de base, au niveau desdites faces.

11. Procédé de fabrication d'une pile à combustible selon l'une quelconque des revendications 1 à 9, **caractérisé en ce que** l'assemblage d'au moins deux modules de bases, mettant en regard des faces, dont au moins l'une est pourvue d'un réseau de connexions électriques et/ou de distribution des réactifs, comprend successivement les étapes suivantes :
- une étape de masquage de la ou les faces pourvues du ou desdits réseaux par une couche étanche et isolante;
- une étape de planarisation de la ou les faces pourvues du ou desdits réseaux;
- une étape de mise en place d'une couche de liaison sur l'une au moins des faces à assembler;
- une étape de solidarisation desdites faces à assembler desdits modules de base.

12. Procédé de fabrication selon la revendication 10 ou 11, **caractérisé en ce que** la couche de liaison (13) est une couche de constitution identique à la couche de membrane ou une couche en un matériau choisi dans le groupe constitué par l'oxyde de silicium ou le nitrure de silicium.

13. Procédé de fabrication d'une pile à combustible selon la revendication 10 ou 11, **caractérisé en ce que** la couche de liaison correspond à un adhésif choisi parmi les époxydes, les polyimides, les silicones, les polymères acryliques.

14. Procédé de fabrication d'une pile à combustible selon l'une quelconque des revendications 10 à 13, **caractérisé en ce que** l'étape de solidarisation s'effectue par serrage.

15. Procédé de fabrication d'une pile à combustible selon l'une quelconque des revendications 10 à 13, **caractérisé en ce que** l'étape de solidarisation s'effectue par adhésion moléculaire.

16. Procédé de fabrication d'une pile à combustible selon l'une quelconque des revendications 10 à 13, **caractérisé en ce que** l'étape de solidarisation s'effectue par collage.

17. Procédé de fabrication d'une pile à combustible selon la revendication 11, **caractérisé en que** l'étape de masquage, l'étape de planarisation, l'étape de mise en place de la couche de liaison sont effectuées simultanément par mise en place d'une couche unique.

18. Procédé de fabrication d'une pile à combustible selon la revendication 17, **caractérisé en ce que** la couche unique est de constitution identique à la couche de membrane.

19. Procédé de fabrication d'une pile à combustible selon la revendication 17, **caractérisé en ce que** la couche unique est en un matériau choisi dans le groupe constitué par l'oxyde de silicium et le nitrure de silicium.

20. Pile à combustible comprenant :
- au moins deux supports (9) comprenant une pluralité de trous (1,10), chaque trou débouchant de part et d'autre de deux faces opposées (9a, 9b) de chaque support, par une première section d'orifice (1a) et une seconde section d'orifice (1b) et chaque trou présentant une surface latérale (1c) ;
- des cellules élémentaires réalisées sur la surface latérale (1c) de chacun desdits trous ;
- sur au moins l'une desdites faces opposées de chaque support, un réseau de connexions électriques (11, 12) et un réseau de distribution des réactifs, lesdits réseaux reliant les cellules élémentaires entre elles, l'ensemble formé d'un support, des cellules élémentaires et desdits réseaux constituant un module de base, au moins deux modules de base étant assemblés de sorte que les cellules élémentaires de chaque module de base soient placés en regard avec les cellules élémentaires du (des) module(s) de base adjacent(s),
**caractérisé en ce que**
chaque trou est tel qu'au moins l'une desdites première ou seconde section d'orifice (1a, 1b) de chaque trou présente une surface inférieure à la surface d'au moins une section dudit trou prise dans un plan parallèle auxdites faces opposées et **en ce que**, pour chaque trou, la première ou seconde section d'orifice présente une surface inférieure à la surface de l'autre section d'orifice.

## Claims

1. Process for producing a fuel cell, the said fuel cell comprising a set of individual cells which are electrically connected to one another, each individual cell comprising at least three layers, namely a membrane layer positioned between a first electrode layer and a second electrode layer, the said process comprising, in succession, the following steps:
- a step of forming a plurality of holes (1, 10) in at least two substrates (9), each hole opening out on either side on two opposite faces (9a, 9b) of each substrate, via a first orifice section (1a) and a second orifice section (1b), and each hole having a lateral surface (1c) ;
- a step of forming individual cells on the lateral surface (1c) of each of the said holes;
- a step of forming, on at least one of the said opposite faces of each substrate, a network of electrical connections (11, 12) and a reactant distribution network, the said networks connecting the individual cells to one another, the assembly formed by a substrate, the individual cells and the said networks constituting a base module (9');
- a step of assembling at least two base modules (9') in such a way that the individual cells of each base module are positioned facing the individual cells of the adjacent base module(s),
the said process being **characterized in that**, during the step of forming the plurality of holes, each hole is formed in such a manner that at least one out of the said first or second orifice section (1a, 1b) of each hole has a surface area which is smaller than the surface area of at least one cross-section through the said hole taken in a plane which is parallel to the said opposite faces, and **in that**, for each hole, the first or second orifice section has a surface area which is smaller than the surface area of the other orifice section.

2. Process for producing a fuel cell according to Claim 1, **characterized in that** the holes are substantially in the shape of a truncated cone.

3. Process for producing a fuel cell according to Claim 1, **characterized in that** the holes are substantially in the shape of a truncated pyramid.

4. Process for producing a fuel cell according to any one of Claims 1 to 3, **characterized in that** each hole formed in each substrate has a first orifice section and a second orifice section with surface areas which are smaller than the lateral surface of the said hole.

5. Process for producing a fuel cell according to any one of Claims 1 to 4, **characterized in that** the holes formed in each substrate are produced by etching.

6. Process for producing a fuel cell according to Claims 1 to 4, **characterized in that** the holes formed in each substrate are produced by laser ablation.

7. Process for producing a fuel cell according to any one of the preceding claims, **characterized in that** the substrate consists of a material selected from a group consisting of silicon, such as porous silicon, graphite, ceramics and polymers.

8. Process for producing a fuel cell according to any one of the preceding claims, **characterized in that** the individual cells are formed by successive deposition, on the lateral surface of each of the said holes, of at least three layers, in order to form the first electrode layer, the membrane layer and the second electrode layer.

9. Process for producing a fuel cell according to Claim 8, **characterized in that** the step of forming the individual cells also comprises the step of depositing current collectors at each electrode layer.

10. Process for producing a fuel cell according to any one of Claims 1 to 9, **characterized in that** the assembling of two base modules, when this assembling places two faces without networks as defined in Claim 1 facing one another, comprises the following successive steps:
- a step of applying a bonding layer (13) to at least one of the said faces without networks; and
- a step of joining the base modules at the said faces.

11. Process for producing a fuel cell according to any one of Claims 1 to 9, **characterized in that** the assembling of at least two base modules, placing faces of which at least one is provided with a network of electrical connections and/or a reactant distribution network facing one another, comprises the following successive steps:
- a step of masking the face(s) provided with the said network(s) by means of an impervious and insulating layer;
- a step of planarizing the face(s) provided with the said network(s);
- a step of applying a bonding layer to at least one of the faces which are to be assembled;
- a step of joining the said faces to be assembled of the said base modules.

12. Process for producing a fuel cell according to Claim 10 or 11, **characterized in that** the bonding layer (13) is a layer of identical composition to the membrane layer or a layer made from a material selected from the group consisting of silicon oxide or silicon nitride.

13. Process for producing a fuel cell according to Claim 10 or 11, **characterized in that** the bonding layer corresponds to an adhesive chosen from epoxides, polyimides, silicones, acrylic polymers.

14. Process for producing a fuel cell according to any one of Claims 10 to 13, **characterized in that** the joining step is effected by clamping.

15. Process for producing a fuel cell according to any one of Claims 10 to 13, **characterized in that** the joining step is effected by molecular adhesion.

16. Process for producing a fuel cell according to any one of Claims 10 to 13, **characterized in that** the joining step is effected by adhesive bonding.

17. Process for producing a fuel cell according to Claim 11, **characterized in that** the masking step, the planarization step, the step of applying the bonding layer are effected simultaneously by application of a single layer.

18. Process for producing a fuel cell according to Claim 17, **characterized in that** the single layer has a composition identical to the membrane layer.

19. Process for producing a fuel cell according to claim 17, **characterized in that** the single layer is made from a material selected from the group consisting of silicon oxide and silicon nitride.

20. Fuel cell comprising:
- at least two supports (9) comprising a plurality of holes (1, 10), each hole issuing on either side of two opposite faces (9a, 9b) of each support by a first orifice section (1a) and a second orifice section (1b) and each hole has a lateral surface (1c),
- elementary cells produced on the lateral surface (1c) of each of said holes,
- on at least one of said opposite faces of each support, a network of electrical connections (11, 12) and a reactant distribution network, said networks connecting the fuel cells to one another, the assembly formed by a support, elementary cells and said networks constituting a base module, at least two base modules being assembled in such a way that the elementary cells of each base module are placed facing elementary cells of the adjacent base modules, **characterized in that**
each hole is such that at least one of said first or second orifice sections (1a, 1b) of each hole has a surface smaller than the surface of at least one section of said hole taken in a plane parallel to said opposite faces and **in that**, for each hole, the first or second orifice section has a surface smaller than the surface of the other orifice section.

## Patentansprüche

1. Verfahren zur Herstellung einer Brennstoffzelle, wobei diese Brennstoffzelle eine Gruppe elektrisch miteinander verbundener Elementarzellen umfasst, jede Elementarzelle wenigstens drei Schichten aufweist, nämlich eine erste Elektrodenschicht, eine zweite Elektrodenschicht und eine dazwischen befindliche Membranschicht, und das genannte Verfahren sukzessive die folgenden Schritte umfasst:
- einen Schritt zur Realisierung einer Vielzahl von Löchern (1, 10) in wenigstens zwei Trägern (9), wobei jedes Loch auf beiden der entgegengesetzten Seiten (9a, 9b) jedes Trägers mündet, mit einem ersten Öffnungsquerschnitt (1a) und einem zweiten Öffnungsquerschnitt (1b), und jedes Loch eine Seitenfläche (1 c) aufweist;
- einen Schritt zur Realisierung von Elementarzellen auf der Seitenfläche (1c) von jedem der genannten Löcher;
- einen Schritt zur Realisierung - auf wenigstens einer der genannten entgegengesetzten Seiten jedes Trägers - eines elektrischen Verbindungsnetzes (11, 12) und eines Reagenzienverteilungsnetzes, wobei die genannten Netze die Elementarzellen miteinander verbinden und das aus einem Träger, den Elementarzellen und den genannten Netzen bestehende Ganze einen Basismodul (9') bildet;
- einen Schritt, in dem zwei Basismodule (9') so zusammengebaut werden, dass die Elementarzellen jedes Basismoduls den Elementarzellen des (der) angrenzenden Basismoduls (Basismodule) gegenüberstehen;
dabei ist das genannte Verfahren **dadurch gekennzeichnet, dass** während des Schritts zur Realisierung der Vielzahl von Löchern jedes Loch so realisiert wird, dass wenigstens einer, d.h. der erste oder der zweite der genannten Öffnungsquerschnitte (1a, 1b) jedes Lochs eine Fläche aufweist, die kleiner ist als die Fläche von wenigstens einem Querschnitt des genannten Lochs in einer zu den genannten entgegengesetzten Seiten parallelen Ebene, und **dadurch**, dass für jedes Loch der erste oder der zweite Öffnungsquerschnitt eine Fläche aufweist, die kleiner ist als die Fläche des anderen Öffnungsquerschnitts.

2. Verfahren zur Herstellung einer Brennstoffzelle nach Anspruch 1, **dadurch gekennzeichnet, dass** die Löcher im Wesentlichen kegelstumpfartig sind.

3. Verfahren zur Herstellung einer Brennstoffzelle nach Anspruch 1, **dadurch gekennzeichnet, dass** die Löcher im Wesentlichen pyramidenstumpfförmig sind.

4. Verfahren zur Herstellung einer Brennstoffzelle nach einem der Ansprüche 1 bis 3, **dadurch gekennzeichnet, dass** jedes in jedem Träger realisierte Loch einen ersten Öffnungsquerschnitt und einen zweiten Öffnungsquerschnitt mit kleineren Flächen als der Seitenfläche des genannten Lochs aufweist.

5. Verfahren zur Herstellung einer Brennstoffzelle nach einem der Ansprüche 1 bis 4, **dadurch gekennzeichnet, dass** die Löcher in jedem Träger durch Ätzung realisiert werden.

6. Verfahren zur Herstellung einer Brennstoffzelle nach einem der Ansprüche 1 bis 4, **dadurch gekennzeichnet, dass** die Löcher in jedem Träger durch Laserablation realisiert werden.

7. Verfahren zur Herstellung einer Brennstoffzelle nach einem der vorangehenden Ansprüche, **dadurch gekennzeichnet, dass** der Träger durch ein aus einer Gruppe ausgewähltes Material gebildet wird, die Silicium wie etwa das poröse Silicium, Graphit, Keramiken und Polymere umfasst.

8. Verfahren zur Herstellung einer Brennstoffzelle nach einem der vorangehenden Ansprüche, **dadurch gekennzeichnet, dass** die Realisierung der Elementarzellen durch sukzessive Abscheidungen auf der Seitenfläche jedes der genannten Löcher erfolgt, um die erste Elektrodenschicht, die Membranschicht und die zweite Elektrodenschicht auszubilden.

9. Verfahren zur Herstellung einer Brennstoffzelle nach Anspruch 8, **dadurch gekennzeichnet, dass** die Realisierung der Elementarzellen außerdem das Abscheiden von Stromkollektoren in Höhe jeder Elektrodenschicht umfasst.

10. Verfahren zur Herstellung einer Brennstoffzelle nach einem der Ansprüche 1 bis 9, **dadurch gekennzeichnet, dass** der Zusammenbau von zwei Basismodulen, bei dem zwei sich gegenüberstehende Seiten ohne die in Anspruch 1 definierten Netze zusammengebaut werden, die folgenden Schritte umfasst:
- einen Schritt zur Abscheidung einer Verbindungsschicht (13) auf wenigstens einer der genannten netzlosen Seiten; und
- einen Schritt zur Vereinigung der Basismodule mittels der genannten Seiten.

11. Verfahren zur Herstellung einer Brennstoffzelle nach einem der Ansprüche 1 bis 9, **dadurch gekennzeichnet, dass** der Zusammenbau von wenigstens zwei Basismodulen mit sich gegenüberstehende Seiten, von denen wenigstens eine ein elektrisches Verbindungsnetz und/oder ein Reagenzienverteilungsnetz umfasst, die folgenden Schritte umfasst:
- einen Schritt zur Maskierung der mit dem (den) genannten Netz(en) versehenen Seite(n) mit einer dichten und isolierenden Schicht;
- einen Schritt zur Planarisierung der mit dem (den) genannten Netz(en) versehenen Seite(n);
- einen Schritt zur Abscheidung einer Verbindungsschicht auf wenigstens einer der zusammenzufügenden Seiten;
- einen Schritt zur Vereinigung der genannten zusammenzufügenden Seiten der genannten Basismodule.

12. Herstellungsverfahren nach Anspruch 10 oder 11, **dadurch gekennzeichnet, dass** die Verbindungsschicht (13) eine Schicht mit derselben Konstitution bzw. Zusammensetzung wie die Membranschicht ist, oder eine Schicht aus einem Material ist, das aus der Gruppe ausgewählt wird, die das Siliciumoxid oder das Siliciumnitrid umfasst.

13. Verfahren zur Herstellung einer Brennstoffzelle nach Anspruch 10 oder 11, **dadurch gekennzeichnet, dass** die Verbindungsschicht einem Adhäsiv entspricht, das ausgewählt wird unter den Epoxiden, den Polyimiden, den Siliconen, den Acrylpolymeren.

14. Verfahren zur Herstellung einer Brennstoffzelle nach einem der Ansprüche 10 bis 13, **dadurch gekennzeichnet, dass** der Vereinigungsschritt eine Klemmung umfasst.

15. Verfahren zur Herstellung einer Brennstoffzelle nach einem der Ansprüche 10 bis 13, **dadurch gekennzeichnet, dass** der Vereinigungsschritt eine molekulare Adhäsion umfasst.

16. Verfahren zur Herstellung einer Brennstoffzelle nach einem der Ansprüche 10 bis 13, **dadurch gekennzeichnet, dass** der Vereinigungsschritt eine Klebung umfasst.

17. Verfahren zur Herstellung einer Brennstoffzelle nach Anspruch 11, **dadurch gekennzeichnet, dass** der Maskierungsschritt, der Planarisierungsschritt und der Abscheidungsschritt der Verbindungsschicht simultan realisiert werden, durch das Abscheiden einer einzigen Schicht.

18. Verfahren zur Herstellung einer Brennstoffzelle nach Anspruch 17, **dadurch gekennzeichnet, dass** die einzige Schicht die gleiche Konstitution bzw. Zusammensetzung wie die Membranschicht hat.

19. Verfahren zur Herstellung einer Brennstoffzelle nach Anspruch 17, **dadurch gekennzeichnet, dass** die einzige Schicht aus einem Material ist, das ausgewählt wird aus der Gruppe, die Siliciumoxid und Siliciumnitrid umfasst.

20. Brennstoffzelle, umfassend:
- wenigstens zwei Träger (9) mit einer Vielzahl von Löchern (1, 10), wobei jedes Loch auf beiden der entgegengesetzten Seiten (9a, 9b) jedes Trägers mündet, mit einem ersten Öffnungsquerschnitt (1a) und einem zweiten Öffnungsquerschnitt (1b), und jedes Loch eine Seitenfläche (1c) aufweist;
- Elementarzellen, realisiert auf der Seitenfläche (1c) von jedem der genannten Löcher;
- auf wenigstens einer der genannten entgegengesetzten Seiten jedes Trägers ein elektrisches Verbindungsnetz (11, 12) und ein Reagenzienverteilungsnetz, wobei die genannten Netze die Elementarzellen miteinander verbinden und das aus einem Träger, den Elementarzellen und den genannten Netzen bestehende Ganze einen Basismodul bildet, und wenigstens zwei Basismodule so zusammengebaut werden, dass die Elementarzellen jedes Basismoduls den Elementarzellen des (der) angrenzenden Basismoduls (Basismodule) gegenüberstehen;
**dadurch gekennzeichnet, dass** jedes Loch so realisiert wird, dass wenigstens einer, d.h. der erste oder der zweite der genannten Öffnungsquerschnitte (1a, 1b) jedes Lochs eine Fläche aufweist, die kleiner ist als die Fläche von wenigstens einem Querschnitt des genannten Lochs in einer zu den genannten entgegengesetzten Seiten parallelen Ebene, und **dadurch**, dass für jedes Loch der erste oder der zweite Öffnungsquerschnitt eine Fläche aufweist, die kleiner ist als die Fläche des anderen Öffnungsquerschnitts.
